# FASCICULE DE BREVET EUROPEEN

(11) **EP 0 681 302 B1**
(45) Date de publication et mention de la délivrance du brevet: **27.05.1998**
(21) Numéro de dépôt: 95400806.6
(22) Date de dépôt: 10.04.1995
(51) Int. Cl.: G21C 19/18

(54) **Machine de chargement d'assemblages combustibles du coeur d'un réacteur nucléaire ayant des poutres de guidage amovibles**
Maschine zum Beladen von Brennstabbündeln der Spaltzone eines Kernreaktors mit abnehmbaren Leitträgern
Machine for loading fuel assemblies of a nuclear reactor core with removable guide beams

(30) Priorité: 05.05.1994 FR 9405547
(43) Date de publication de la demande: 08.11.1995
(73) Titulaire: FRAMATOME, 92400 Courbevoie (FR)
(72) Inventeur: Joly, Philippe, F-78750 Mareil Marly (FR)
(74) Mandataire: Bouget, Lucien

(56) Documents cités:
- EP-A- 0 091 580
- EP-A- 0 291 286
- DE-A- 3 109 249
- GB-A- 2 060 238

## Description

L'invention concerne une machine de chargement d'assemblages combustibles du coeur d'un réacteur nucléaire.

Les réacteurs nucléaires tels que les réacteurs nucléaires à eau sous pression comportent une cuve qui renferme le coeur du réacteur nucléaire constitué par des assemblages combustibles et dans laquelle circule, en service, le fluide de refroidissement du réacteur.

Le coeur du réacteur est constitué par des assemblages combustibles qui sont généralement d'une forme prismatique droite, qui viennent reposer sur une plaque de support de coeur par l'intermédiaire de leur partie inférieure ou embout inférieur et qui sont placés dans une disposition verticale. Les assemblages combustibles sont juxtaposés et constituent un ensemble dense dans lequel chacun des assemblages combustibles est au contact d'assemblages voisins, dans une disposition en réseau, par l'intermédiaire de ses embouts et de ses grilles-entretoises.

Le matériau combustible fissile contenu dans les assemblages est consommé progressivement dans le réacteur nucléaire en service, si bien que les assemblages combustibles sont appauvris progressivement en matériau combustible fissile et subissent de ce fait une certaine usure.

Il est donc nécessaire d'effectuer périodiquement des opérations de rechargement du coeur du réacteur nucléaire. Ces opérations qui nécessitent un arrêt et un refroidissement du réacteur nucléaire sont généralement réalisées sur une fraction du coeur du réacteur, de manière à optimiser l'utilisation du combustible.

D'autre part, lors de la mise en service initiale d'un réacteur nucléaire, il est nécessaire d'effectuer le chargement du coeur avec des assemblages combustibles neufs constituant la première charge du réacteur nucléaire.

Les opérations de chargement ou de rechargement d'un réacteur nucléaire sont réalisées sous eau, le couvercle de la cuve étant démonté, depuis le niveau supérieur de la piscine du réacteur dans le fond de laquelle débouche le puits de cuve.

Pour effectuer les opérations de chargement et de rechargement, on utilise une machine de levage et de manutention des assemblages combustibles appelée machine de chargement qui comporte des moyens de guidage horizontaux disposés au-dessus du niveau supérieur de la piscine et un chariot monté mobile sur les moyens de guidage, dans au moins deux directions d'un plan horizontal, de manière à pouvoir placer des moyens de préhension et de levage des assemblages combustibles à l'aplomb de chacune des positions d'assemblages combustibles dans le coeur du réacteur nucléaire.

Les moyens de préhension et de levage des assemblages combustibles comportent un fût externe tubulaire de forme généralement cylindrique fixé sur le chariot avec son axe vertical et un mât interne cylindrique dans une disposition coaxiale et monté mobile dans la direction axiale, à l'intérieur du fût externe.

Pour réaliser la mise en place des assemblages combustibles dans le coeur du réacteur où ces assemblages sont placés de manière jointive suivant un réseau, il est nécessaire de disposer de moyens de manutention et de levage extrêmement précis.

En particulier, comme décrit dans le EP-A-0.291.286, par exemple, le mât interne de la machine de chargement doit permettre de déplacer les assemblages combustibles suivant une direction axiale verticale parfaitement définie. Pour cela, le mât interne mobile de la machine de chargement comporte généralement des glissières longitudinales qui coopèrent, lors du déplacement du mât interne, avec des jeux de galets ayant des axes perpendiculaires à la direction axiale du fût externe et du mât interne et qui sont disposés suivant plusieurs ensembles alignés dans des directions parallèles à l'axe du fût externe et du mât interne mobile.

Les déplacements dans la direction axiale, c'est-à-dire dans la direction verticale, du mât mobile pour réaliser les opérations de rechargement du coeur sont de très grande amplitude et doivent être réalisés avec un très grande précision en ce qui concerne l'alignement de la direction de déplacement du mât mobile avec les axes des positions d'assemblage dans le coeur du réacteur en cours de chargement.

Les ensembles de guidage du mât mobile portés par le fût externe qui sont de grandes longueurs, doivent donc présenter des axes d'alignement parfaitement rectilignes et parfaitement définis en orientation et en position.

Avant la mise en service de la machine de chargement ou même en cours d'utilisation, il peut être nécessaire de vérifier et de régler l'alignement des moyens de guidage du mât mobile porté par le fût externe.

Ces réglages peuvent être nécessités en particulier par un déréglage des ensembles à galets des dispositifs de guidage ou par une déformation du fût externe par exemple à la suite d'un choc.

Cette opération qui est réalisée dans le bâtiment réacteur, à proximité du puits de cuve, nécessite la mise en place d'un échafaudage pour pouvoir accéder aux différentes positions de galets le long du fût externe.

Le réglage est effectué au moyen d'excentriques qui sont disposés au niveau de chaque support de galet qui est accessible à travers une ouverture prévue dans le fût externe, au niveau du support de galet.

Une telle opération qui comporte le montage et le démontage d'un échafaudage peut nécessiter une durée de l'ordre de 48 heures pendant lesquelles la machine de chargement est indisponible, ce qui rallonge d'autant la durée totale de l'arrêt du réacteur pour rechargement.

En outre, les opérations de réglage des éléments de guidage du mât mobile de la machine de chargement à l'intérieur de la piscine du réacteur nécessitent une vidange de cette partie de la piscine, après mise en place d'un batardeau.

Le but de l'invention est donc de proposer une machine de chargement d'assemblages combustibles du coeur d'un réacteur nucléaire, à l'intérieur d'une cuve du réacteur ouverte à son extrémité supérieure dans la piscine du réacteur, comportant des moyens de guidage disposés au-dessus de la cuve du réacteur, un chariot monté mobile sur les moyens de guidage, un fût externe tubulaire, fixé sur le chariot avec son axe vertical, un mât interne cylindrique monté dans une disposition coaxiale et mobile dans la direction axiale à l'intérieur du fût externe, grâce à des éléments de guidage et des moyens de déplacement du mât interne dans la direction axiale du fût externe portés par le chariot, les éléments de guidage du mât interne comportant au moins deux rails rectilignes fixés sur le mât interne dans une direction axiale, chacun des rails étant en contact avec un ensemble d'au moins deux jeux de galets montés rotatifs autour d'un axe perpendiculaire à la direction axiale du fût externe et du mât interne espacés l'un de l'autre dans la direction axiale, le fût externe comportant une ouverture traversante pour le passage de chacun des jeux de galets associé à un rail à l'intérieur du fût externe, cette machine de chargement permettant de réaliser des réglages d'alignement et de rectitude des éléments de guidage du mât mobile, de manière simple et à l'extérieur de la piscine du réacteur nucléaire, sans entraîner d'allongement de la durée d'arrêt du réacteur pour chargement ou rechargement.

Dans ce but, les jeux de galets de chacun des ensembles d'au moins deux jeux de galets en contact avec un rail fixé sur le mât interne sont montés sur une poutre rectiligne d'un ensemble d'au moins deux poutres rectilignes munies de moyens de fixation amovible, dans une direction axiale sur la surface extérieure du fût externe.

Afin de bien faire comprendre l'invention, on va maintenant décrire, en se référant aux figures jointes en annexe, un mode de réalisation d'une machine de chargement suivant l'invention.

Les figures 1A et 1B sont des vues schématiques en coupe par un plan vertical de la partie haute et de la partie basse respectivement, d'une machine de chargement suivant l'invention.

La figure 2 est une vue en coupe transversale à plus grande échelle du fût externe et du mât interne de la machine de chargement.

La figure 3 est une vue en coupe partielle par un plan vertical du fût externe et des éléments de guidage d'une machine de chargement suivant l'invention.

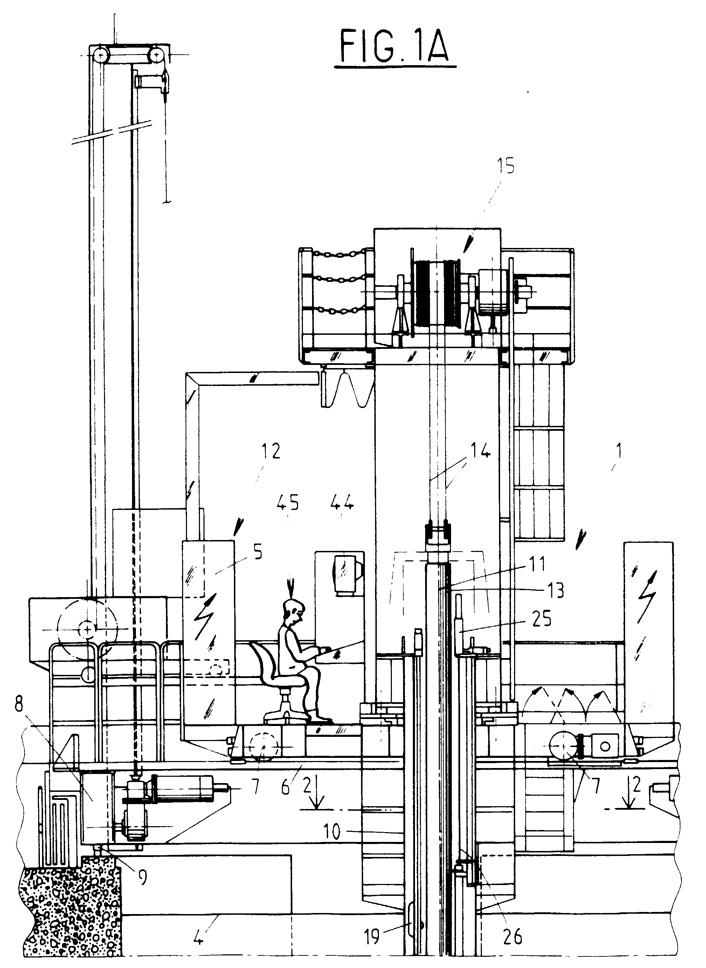

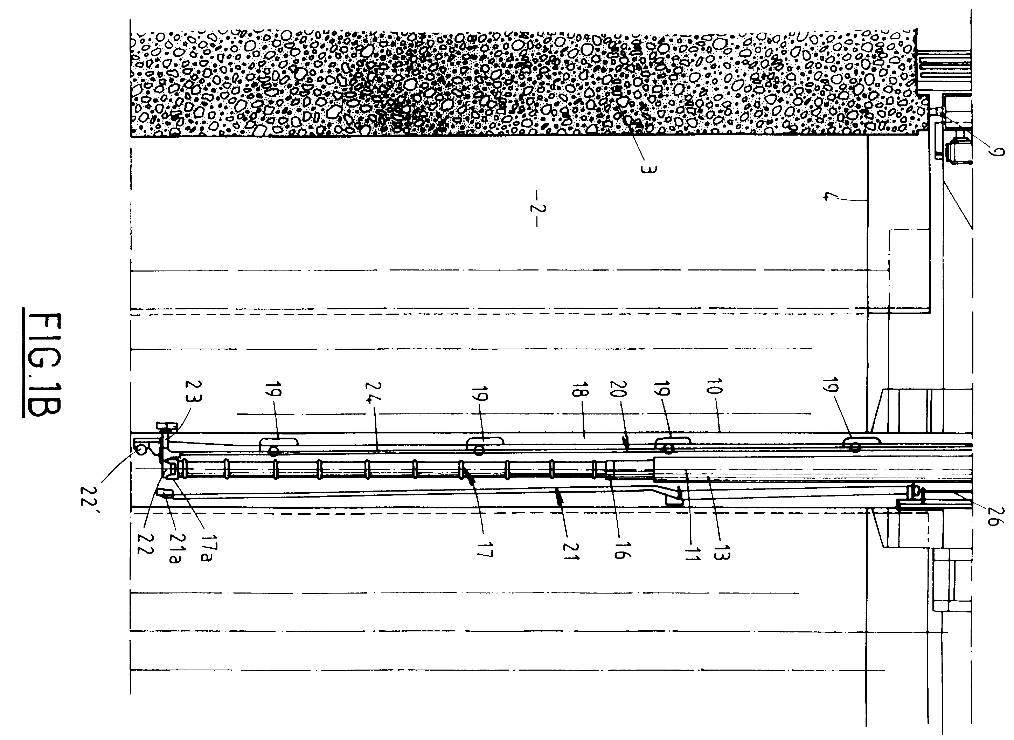

Sur les figures 1A et 1B, on voit une machine de chargement désignée de manière générale par le repère 1, reposant sur le bord supérieur des parois verticales en béton 3 de la piscine 2 d'un réacteur nucléaire dans le fond de laquelle débouche un puits de cuve renfermant la cuve du réacteur. La machine de chargement 1 est utilisée pour enlever ou mettre en place des assemblages combustibles constituant le coeur du réacteur disposé à l'intérieur de la cuve.

Les opérations de chargement ou de rechargement du réacteur nucléaire nécessitant la mise en oeuvre de la machine de chargement 1 sont effectuées sous eau, la piscine étant remplie d'eau jusqu'au niveau 4.

La machine de chargement 1 comporte un chariot mobile désigné de manière générale par le repère 12 permettant d'assurer les déplacements de la machine de chargement pour effectuer la prise en charge ou la dépose d'un assemblage combustible dans un emplacement quelconque du coeur du réacteur à l'intérieur de la cuve.

Le chariot 12 comporte un premier chariot 5 monté mobile sur des rails 6, par l'intermédiaire de roues 7. Les rails 6 sont eux-mêmes fixés sur un second chariot 8 monté mobile sur des rails 9 reposant sur la partie supérieure des parois 3 de la piscine 2 et disposés dans une direction perpendiculaire à la direction des rails 6. Le chariot 12 comportant le premier et le second chariots constitue un chariot à mouvements croisés dans deux directions perpendiculaires du plan horizontal.

Le premier chariot 5 de l'ensemble 12 constituant le chariot de la machine de chargement porte le fût externe tubulaire 10 de la machine de chargement de forme cylindrique et présentant un axe 11 dans la direction verticale. Le fût 10 repose sur le chariot 5, par l'intermédiaire de moyens de guidage permettant son déplacement en rotation et son orientation autour de l'axe 11 sur le premier chariot 5.

A l'intérieur du fût externe 10, est monté dans une disposition coaxiale et de manière à être mobile suivant la direction de l'axe 11 du fût externe, un mât interne 13 fixé par l'intermédiaire de poulies, à des câbles de levage 14 d'un treuil 15. Le mât mobile 13 comporte, à sa partie inférieure, des moyens 16 permettant de réaliser l'accrochage d'un assemblage combustible 17 par l'intermédiaire de son embout supérieur.

Le chariot mobile 12 de la machine de chargement permet de déplacer l'ensemble constitué par le fût externe 10 et le mât interne 13 dans deux directions du plan horizontal par des mouvements croisés. De cette manière, on peut placer le mât mobile 13 à l'aplomb d'une position quelconque à l'intérieur du coeur du réacteur nucléaire pour réaliser la prise en charge ou la dépose d'un assemblage 17 quelconque.

Le fût externe 10 comporte des moyens tels que 18 de guidage dans la direction axiale 11 du mât interne 13, mobile à l'intérieur du fût externe 10.

Un moyen de guidage tel que 18 qui n'a été représenté que de manière très schématique sur la figure 1 comporte des jeux de galets de guidage 19 espacés suivant la direction axiale du fût externe 10 et disposés de manière à coopérer avec des parties de guidage du mât 13, comme il sera expliqué plus loin.

Le mât 13 peut être déplacé dans la direction axiale 11 qui correspond à la direction verticale, pendant l'utilisation de la machine de chargement, grâce au treuil 15, entre une position totalement relevée représentée sur la figure 1 et une position basse dans laquelle le dispositif d'accrochage 16 du mât mobile 13 se trouve au niveau des embouts supérieurs des assemblages du coeur du réacteur nucléaire. Dans cette position basse, on peut réaliser la prise ou la dépose d'un assemblage 17 du coeur du réacteur. Dans la position haute du mât mobile 13, comme représenté sur les figures lA et 1B, l'assemblage combustible 17 fixé à l'extrémité inférieure du mât mobile 13 par l'intermédiaire du dispositif d'accrochage 16 est entièrement logé à l'intérieur du fût externe 10 qui assure la protection de l'assemblage combustible, par exemple pendant des déplacements dans les directions horizontales du chariot 12.

Entre sa position basse et sa position haute, le mât mobile 13 est guidé à l'intérieur du fût externe 10 par les éléments de guidage tels que 18.

L'alignement des jeux de galets 19 des éléments de guidage tels que 18 détermine l'alignement et la direction de déplacement du mât mobile 13 et de l'assemblage 17.

L'alignement des galets 19 doit donc être vérifié et réglé de manière très précise.

La machine de chargement comporte de plus, à l'intérieur du fût externe 10, un moyen de maintien 20 de l'assemblage 17 en position de transport et un moyen 21 permettant de faciliter l'engagement de l'assemblage pour sa mise en place dans le coeur.

Le dispositif de maintien 20 comporte une butée 22 montée pivotante autour d'un axe 23 à la partie d'extrémité inférieure du fût externe 10 et une tige de manoeuvre 24 de direction sensiblement axiale reliée à l'une de ses extrémités à la butée de maintien 22 et à son autre extrémité voisine de la partie supérieure du fût externe 20, à un vérin de manoeuvre.

Le vérin de manoeuvre permet de déplacer la butée 22 entre une position de maintien de l'assemblage 17 représentée en traits pleins sur la figure 1, dans laquelle la butée est engagée dans l'embout inférieur 17a de l'assemblage combustible et une position hors service 22' représentée en pointillés.

Le dispositif d'engagement 21 comporte un corps de grande longueur présentant une partie coudée qui est relié à sa partie supérieure à une tige de manoeuvre 26 reliée à un vérin de manoeuvre 25 au niveau de la partie supérieure du fût externe 10. Le vérin 25 permet de déplacer le corps allongé du dispositif d'engagement 21, par l'intermédiaire de la tige de manoeuvre 26, entre une position hors service représentée sur la figure 1 et une position de service dans laquelle le corps 21 du dispositif d'engagement vient reposer sur des moyens d'accrochage solidaires de la surface extérieure du mât interne mobile 13. Dans cette position de service, la partie inférieure du dispositif d'engagement 21 en-dessous de la partie coudée se trouve disposée de manière adjacente par rapport à la surface latérale de l'assemblage combustible 17. Dans cette position, une butée inférieure 21a permet de guider l'embout inférieur 17a de l'assemblage combustible 17 au moment de la dépose de l'assemblage combustible 17 par le mât mobile 13.

Lorsque le mât mobile 13 auquel est fixé un assemblage combustible 17 est descendu dans la piscine du réacteur puis dans la cuve de manière que le pied de l'assemblage parvienne au voisinage de la plaque inférieure de support du coeur, la butée 21a se recentre sur la plaque inférieure de coeur et guide l'embout inférieur 17a de l'assemblage par rapport à la plaque inférieure de coeur lors de sa descente. L'assemblage est ainsi mis en place de manière très sûre. On assure la mise en place de l'assemblage sur la plaque de support du coeur dans une orientation voulue, grâce à la possibilité d'orientation sur le chariot 5, autour de l'axe 11, du fût externe 10 dans lequel est monté le mât interne mobile 13.

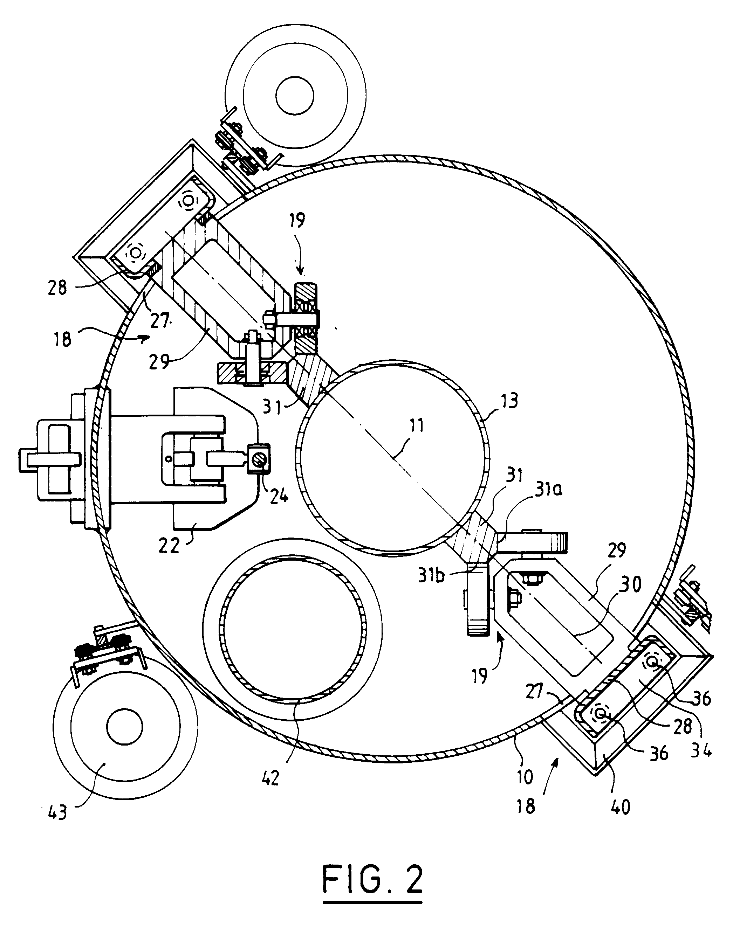

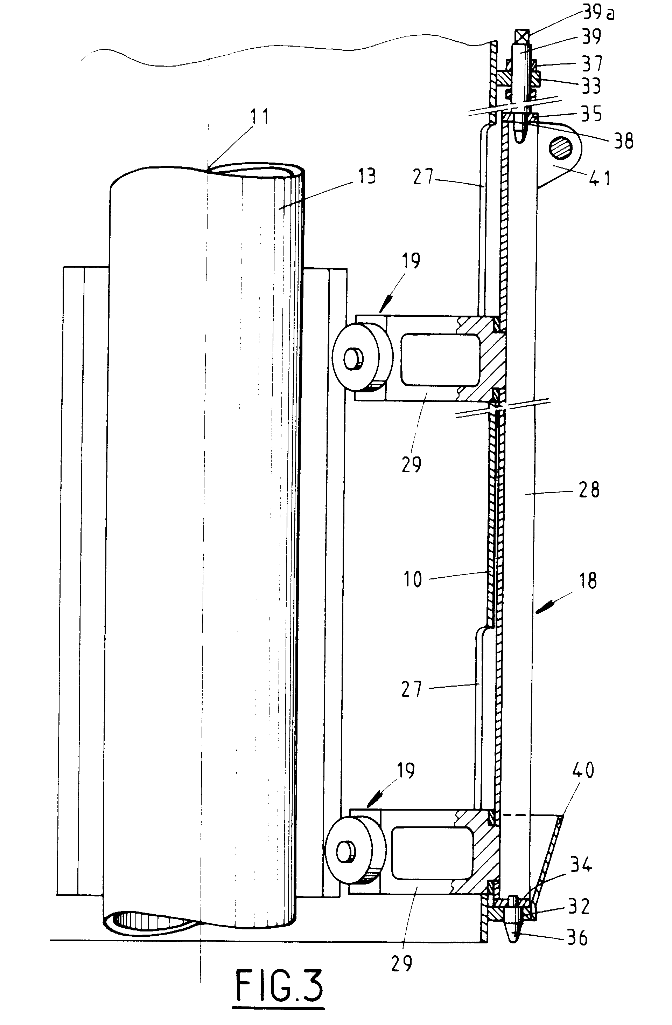

Comme il est visible sur les figures 2 et 3, les éléments de guidage 18 du mât interne mobile 13 sont constitués par des jeux de galets 19 espacés suivant la longueur d'une poutre 28 et portés par des supports 29 rigidement solidaires de la poutre 28.

Chacun des jeux de galets 19 comporte deux galets ayant des axes perpendiculaires entre eux disposés dans un plan perpendiculaire à l'axe 11 commun au fût externe 10 et au mât interne mobile 13.

La poutre 28 de forme profilée ayant une section transversale en forme de U et qui est rectiligne présente une longueur légèrement inférieure à la longueur du fût externe 10. Chacune des poutres 28 est fixée à l'extérieur du fût externe 10 en vis-à-vis et à faible distance de sa surface externe, suivant la direction des génératrices, c'est-à-dire suivant la direction axiale 11 du fût externe 10.

Dans sa partie en vis-à-vis des poutres 28, le fût externe 10 comporte des ouvertures 27 espacées suivant la direction axiale du fût 10, chacune des ouvertures 27 assurant le passage d'un ensemble de galets 19 et du support 29 de ces galets de direction radiale.

Les ouvertures 27 présentent une hauteur dans la direction axiale du fût 10 sensiblement supérieure à la dimension des supports 29 des jeux de galets 19 dans cette direction axiale.

Les ouvertures 27 présentent également une largeur dans la direction circonférentielle sensiblement supérieure à la largeur des supports 29 et des jeux de galets 19 dans la direction circonférentielle.

De cette manière, on peut réaliser facilement le montage des éléments de guidage sur le fût externe de la machine de chargement, comme il sera expliqué plus loin.

Comme il est visible sur la figure 2, la machine de chargement comporte deux éléments de guidage 18 placés en vis-à-vis, de manière que ces deux éléments de guidage présentent un même plan axial 30 du fût 10 et du mât 13 comme plan de symétrie.

En particulier, les galets de chacun des jeux de galets 19 sont disposés de manière symétrique par rapport au plan axial 30.

Le mât interne mobile 13 réalisé sous forme tubulaire comporte deux rails de guidage 31 fixés sur sa surface extérieure dans des dispositions situées à 180° l'une de l'autre.

Les rails 31 comportent chacun deux pistes de roulements rectilignes et planes 31a et 31b symétriques par rapport à un plan axial du mât 13 qui coopèrent avec les surfaces de roulement des galets des jeux de galets 19 pour réaliser le guidage du mât interne mobile 13, au cours de ses déplacements dans la direction axiale 11.

Les galets des jeux de galets 19 et les pistes de roulement 31a et 31b des rails de guidage 31 du mât interne mobile 13 sont alors disposés symétriquement par rapport au plan axial 30.

On peut ainsi réaliser un guidage efficace du mât mobile 13 en utilisant deux ensembles de guidage disposés à 180° l'un de l'autre autour de l'axe 11 du fût externe 10.

On pourrait bien sûr imaginer d'autres dispositions par exemple utiliser trois éléments de guidage disposés à 120° autour de l'axe 11 du fût 10 ou encore quatre éléments disposés à 90° autour de l'axe 11.

Chacun des éléments de guidage de direction axiale constitué par une poutre 18 porte, par l'intermédiaire de supports 29, des ensembles de galets 19 espacés suivant la direction axiale du fût externe 10. Dans le cas d'une machine du type utilisé sur les réacteurs à eau sous pression exploités actuellement, on utilise cinq jeux de deux galets 19 sensiblement régulièrement espacés suivant la direction axiale du fût externe 10.

Le fût externe 10 porte, sur sa surface externe, dans l'alignement de chacune des poutres 28 de direction axiale, une patte de support inférieure 32 et une patte de support supérieure 33.

La patte 32 est fixée sur la surface extérieure du fût externe 10, par exemple par soudage, en-dessous de l'ouverture inférieure 27 permettant le passage du jeu de galets inférieur 19 et de son support 29.

La patte de support supérieure 33 est fixée sur la surface extérieure du fût externe 10, par exemple par soudure, au-dessus de l'ouverture supérieure 27 permettant le passage du jeu de galets supérieur 19 et de son support 29.

Les poutres 28 des éléments de guidage 18 comportent chacune, à l'une de leurs extrémités, une platine de fixation inférieure 34 et à leur extrémité opposée, une platine de fixation supérieure 35.

La platine de fixation inférieure 34 de chacune des poutres 28 porte deux pions de positionnement 36 qui peuvent être engagés dans des ouvertures de dimensions correspondantes traversant la patte de support inférieure 32 du fût externe 10.

Chacune des pattes de support supérieures 33 du fût externe 10 comporte deux fourreaux 37 disposés en vis-à-vis de deux ouvertures 38 traversant la platine 35 de support supérieure de la poutre 28.

La fixation de chacune des poutres 28 sur la surface extérieure du fût externe 10 est réalisée par engagement des pions de positionnement 36 solidaires de la platine inférieure de support 34 de la poutre 28 dans deux ouvertures d'une patte de positionnement inférieure 32 du fût externe 10 et par vissage de deux pions de fixation 39 filetés extérieurement, dans les alésages taraudés de deux fourreaux 37 solidaires d'une patte de support supérieure 33 disposée dans l'alignement axial de la patte inférieure de support 32.

Le vissage des pions de fixation 39, par l'intermédiaire d'un outil engagé sur une partie d'extrémité profilée 39a du pion, permet d'engager la partie inférieure de blocage du pion de fixation dans une ouverture 38 de la platine de fixation supérieure 35 de la poutre 28.

Une paroi 40 évasée vers le haut, en forme d'entonnoir permet d'assurer le guidage de la partie inférieure de la poutre 28 et l'engagement des pions de positionnement 36 dans les ouvertures de la patte inférieure de support 32 du fût externe 10.

Chacune des poutres 28 comporte de plus un anneau de manutention 41 au voisinage de sa partie supérieure.

Comme il est visible sur la figure 2, la machine de chargement comporte de plus une caméra vidéo fixée à l'extrémité inférieure d'un mât tubulaire 42 monté mobile dans la direction axiale à l'intérieur du fût externe 10.

La caméra fixée à l'extrémité du mât tubulaire 42 permet de visualiser les opérations de prise et de dépose des assemblages combustibles 17 dans le coeur du réacteur. La poutre tubulaire 42 de fixation de la caméra vidéo possède une motorisation et un guidage indépendants afin de déplacer la caméra vidéo, pendant les opérations de manutention et de levage des assemblages combustibles.

Sur la surface extérieure du fût externe 10 sont également fixés trois rails 43 de direction axiale disposés à 120° les uns des autres autour de l'axe 11 du fût externe 10 et portant chacun un projecteur monté sur un chariot permettant d'éclairer une partie de la zone d'intervention de la machine de chargement.

Les images fournies par la caméra suspendue à la poutre tubulaire 42 sont transmises à un écran vidéo 44 disposé au poste de commande 45 de la machine de chargement porté par le chariot mobile 12 ou installé sur le plancher de service.

A l'issue d'une opération de chargement ou de rechargement du coeur d'un réacteur nucléaire en assemblages combustibles, en utilisant une machine de chargement suivant l'invention, on réalise le démontage des poutres 28 des éléments de guidage 18 du fût externe 10. Ce démontage peut être réalisé très facilement, pour chacune des poutres 28, en dévissant les pions de fixation 39, de manière à faire sortir les parties d'engagement inférieures de ces pions de fixation des ouvertures correspondantes 38 de la platine supérieure de fixation 35 de la poutre 28.

La poutre 28 est reliée par l'intermédiaire de son anneau de manutention 41, au crochet de levage d'un palan mobile sur un rail fixé sous le chariot de la machine de chargement. Le palan permet de réaliser le levage de la poutre 28, de manière à dégager les pions de positionnement 36 des ouvertures de la patte de support inférieure 32 du fût externe 10. On peut alors dégager entièrement la poutre 28 du fût externe 10 en la déplaçant dans une direction radiale, de manière à sortir les jeux de galets 19 portés par les supports 29 des ouvertures 27.

La poutre 28 est ensuite reprise par le pont polaire du réacteur nucléaire et sortie du bâtiment réacteur.

On effectue successivement le démontage des deux poutres des deux éléments de guidage du fût externe qui sont sorties du bâtiment réacteur avant la remise en fonctionnement du réacteur nucléaire.

Les deux poutres sont stockées en position horizontale à l'extérieur du bâtiment réacteur, dans un local où l'on peut effectuer la vérification et le réglage de l'alignement des jeux de galets de chacune des poutres.

Dans le cas d'une détérioration d'un ou plusieurs galets, on peut en effectuer facilement le placement.

Les opérations de réglage et de remise en état des éléments de guidage de la machine de chargement peuvent donc être réalisées dans de très bonnes conditions pour le personnel chargé de cette tâche et sans avoir à intervenir à l'intérieur du bâtiment du réacteur. En outre, ces opérations peuvent être réalisées pendant le fonctionnement du réacteur nucléaire, c'est-à-dire sans empiéter sur la période d'arrêt du réacteur nucléaire pendant laquelle on réalise le chargement ou le rechargement.

Les éléments de guidage sont donc disponibles pour une opération de chargement ou de rechargement d'un réacteur nucléaire en utilisant une machine de chargement suivant l'invention. En particulier, sur le site d'une centrale nucléaire comportant plusieurs réacteurs équipés de machines de chargement du même type, il est possible d'équiper une machine quelconque avec des éléments de guidage standard dont on a effectué le réglage et/ou la réparation après une opération de rechargement précédente.

Pour réaliser la mise en place des éléments de guidage sur une machine de chargement, avant une opération de chargement ou de rechargement, on introduit les éléments de guidage dans le bâtiment réacteur, puis on les met en place au voisinage du fût externe de la machine de chargement grâce au pont polaire du réacteur nucléaire.

Chacun des éléments de guidage est ensuite repris par le palan situé sous le chariot de la machine de chargement et mobile sur un rail dans une direction radiale.

La poutre constituant le support de l'élément de guidage est placée en position verticale au voisinage de la surface externe du fût externe 10 puis déplacée radialement par le palan de manière que les jeux de galets 19 et leur support 29 soient introduits dans les ouvertures 27 correspondantes, dans une position soulevée par rapport à l'extrémité inférieure des ouvertures 27.

La poutre 28 est ensuite descendue à la verticale en utilisant le palan, de manière que les pions de positionnement 36 fixés à sa partie inférieure qui est guidée par la paroi 40 en forme d'entonnoir s'engagent dans les ouvertures correspondantes de la patte de support 32 du fût externe 10. On réalise alors la fixation de la partie supérieure de la poutre 28, par vissage des pions de fixation 39 dans les fourreaux 37 de la patte de support supérieure 33 du fût externe 10, de manière que la partie inférieure d'engagement de chacun des pions 39 vienne s'engager dans l'ouverture 38 correspondante de la platine de fixation supérieure 35 de la poutre 28.

On réalise successivement le montage de chacune des poutres constituant le support de chacun des éléments de guidage.

La machine de chargement est alors prête à fonctionner, le mât interne (13) mobile étant guidé parfaitement dans la direction verticale par les jeux de galets 19.

Dans le cas où l'un des éléments de guidage s'avère défectueux pendant le chargement ou le rechargement du réacteur nucléaire, par exemple à la suite d'un incident, il est possible de réaliser son démontage sans vider la piscine du réacteur nucléaire et son réglage sur le plancher de service du bâtiment réacteur ou son remplacement par un nouvel élément de guidage dont on a effectué le réglage et la vérification à l'extérieur du bâtiment du réacteur.

La machine de chargement suivant l'invention peut donc être mise en oeuvre dans tous les cas dans de très bonnes conditions de fonctionnement et sa remise en état, après un incident, peut être réalisée de manière simple et rapide.

L'invention ne se limite pas au mode de réalisation qui a été décrit.

C'est ainsi qu'on peut imaginer des moyens de positionnement et de fixation de la poutre de support des éléments de guidage sur le fût externe de la machine de chargement d'un type différent de ceux qui ont été décrits.

On peut également imaginer l'utilisation d'un nombre d'éléments de guidage en forme de poutre différent de deux comportant chacun un nombre de jeux de galets différent de cinq.

La machine de chargement suivant l'invention peut être utilisée pour effectuer des opérations de chargement ou de rechargement de réacteurs nucléaires de types très divers.

## Revendications

1. Machine de chargement d'assemblages combustibles (17) du coeur d'un réacteur nucléaire, à l'intérieur d'une cuve du réacteur ouverte à son extrémité supérieure dans la piscine (2) du réacteur, comportant des moyens de guidage (6, 9) disposés au-dessus de la cuve du réacteur, un chariot (12) monté mobile sur les moyens de guidage (6, 9), un fût externe tubulaire (10), fixé sur le chariot (12) avec son axe (11) vertical, un mât interne (13) cylindrique monté dans une disposition coaxiale et mobile dans la direction axiale (11) à l'intérieur du fût externe (10), grâce à des éléments de guidage (18) et des moyens de déplacement (14, 15) du mât interne (13) dans la direction axiale (11) du fût externe (10) portés par le chariot (12), les éléments de guidage (18) du mât interne (13) comportant au moins deux rails rectilignes (31) fixés sur le mât interne (13) dans une direction axiale, chacun des rails (31) étant en contact avec un ensemble d'au moins deux jeux de galets (19) montés rotatifs autour d'un axe perpendiculaire à la direction axiale du fût externe (10) et du mât interne (13) espacés l'un de l'autre dans la direction axiale, le fût externe (10) comportant une ouverture traversante (27) pour le passage de chacun des jeux de galets (19) associé à un rail (31) à l'intérieur du fût externe (13), caractérisée par le fait que les jeux de galets (19) de chacun des ensembles d'au moins deux jeux de galets (19) en contact avec un rail (31) fixé sur le mât interne (13) sont montés sur une poutre rectiligne (98) d'un ensemble d'au moins deux poutres rectilignes (28) munies de moyens de fixation amovible (36, 39), dans une direction axiale sur la surface extérieure du fût externe (10).

2. Machine de chargement suivant la revendication 1, caractérisée par le fait que les galets de chacun des jeux de galets (19) sont montés rotatifs sur un support (29) solidaire de la poutre (28) s'étendant dans une direction perpendiculaire à la direction axiale de la poutre (28), susceptible de passer avec jeu à l'intérieur d'une ouverture (27) du fût externe (10).

3. Machine de chargement suivant la revendication 2, caractérisée par le fait qu'elle comporte deux éléments de guidage (18) disposés à 180° l'un de l'autre autour de l'axe (11) du fût externe (10), de manière que les galets de chacun des jeux de galets (19) soient disposés symétriquement par rapport à un plan axial (30) du fût externe (10).

4. Machine de chargement suivant la revendication 3, caractérisée par le fait que le mât interne mobile (13) comporte des rails de guidage (31) comportant des pistes rectilignes planes (31a, 31b) destinées à coopérer avec les surfaces de roulement des galets des jeux de galets (19) pour assurer le guidage du mât mobile (13) lors de ses déplacements dans la direction axiale.

5. Machine de chargement suivant l'une quelconque des revendications 1 à 4, caractérisée par le fait que les moyens de fixation amovibles de chacune des poutres (28) sur le fût externe (10) comportent au moins un pion de positionnement (36) solidaire d'une partie d'extrémité axiale de la poutre (28) destiné à être engagé dans une ouverture d'une patte de support (32) solidaire du fût externe (10) et au moins un pion de fixation (39) fileté destiné à être vissé dans un fourreau (37) taraudé extérieurement fixé sur le fût externe (10) et comportant une partie d'engagement dans une ouverture traversant une partie d'extrémité de la poutre (28) opposée au pion de positionnement (36).

6. Machine de chargement suivant la revendication 5, caractérisée par le fait que les moyens de fixation amovibles de chacune des poutres (28) comportent deux pions de positionnement (36) et deux pions de fixation (39).

7. Machine de chargement suivant l'une quelconque des revendications 1 à 6, caractérisé par le fait que les poutres rectilignes (28) des éléments de guidage (18) comportent chacune un anneau de manutention (41).

8. Machine de chargement suivant l'une quelconque des revendications 6 et 7, caractérisé par le fait que le fût externe (10) comporte au-dessus de chacune des pattes de support inférieures (32) d'une poutre (28) d'un élément de guidage (18), une paroi de guidage (40) évasée vers le haut en forme d'entonnoir pour assurer le guidage de la partie d'extrémité de la poutre (28) comportant le pion de positionnement (36) et l'engagement du pion de positionnement (36) dans l'ouverture de la patte de support (32), lors de la mise en place de l'élément de guidage (18) sur le fût externe (10).

## Patentansprüche

1. Vorrichtung zum Beladen des Kerns eines Kernreaktors mit Brennelementbündeln (17), im Inneren eines an seinem oberen Ende offenen Reaktorbehälters im Becken (2) des Reaktors, die Führungseinrichtungen (6, 9), die oberhalb des Reaktorbehälters angeordnet sind, einen Wagen (12), der auf den Führungseinrichtungen (6, 9) beweglich montiert ist, einen äußeren rohrförmigen Schaft (10), der an dem Wagen (12) mit seiner senkrechten Achse (11) befestigt ist, und einen inneren zylindrischen Mast (13) aufweist, der in koaxialer Anordnung und in axialer Richtung (11) beweglich im Inneren des äußeren Schaftes (10) mittels Führungselementen (18) und Einrichtungen zum Bewegen (14, 15) des inneren Mastes (13) in axialer Richtung (11) des äußeren Schaftes (10), die vom Wagen (12) getragen werden, montiert ist, wobei die Führungselemente (18) des inneren Mastes (13) wenigstens zwei geradlinige Schienen (31) aufweisen, die am inneren Mast (13) in axialer Richtung befestigt sind, wobei jede von den Schienen (31) in Berührung mit einer Anordnung von wenigstens zwei Sätzen von Rollen (19) steht, die drehbeweglich um eine Achse senkrecht zur axialen Richtung des äußeren Schaftes (10) und des inneren Mastes (13) montiert und voneinander in axialer Richtung beabstandet sind, wobei der äußere Schaft (10) eine hindurchverlaufende Öffnung (27) für den Durchgang von jedem der Sätze von Rollen (19) aufweist, der einer Schiene (31) im Inneren des äußeren Schaftes (13) zugeordnet ist, dadurch gekennzeichnet, daß die zwei Sätze von Rollen (19) von jeder der Anordnungen von wenigstens zwei Sätzen von Rollen (19) in Berührung mit einer am inneren Mast (13) befestigten Schiene (31) an einem geradlinigen Träger (98) einer Anordnung von wenigstens zwei geradlinigen Trägern (28), die mit abnehmbaren Befestigungseinrichtungen (36, 39) versehen sind, in einer axialen Richtung an der äußeren Oberfläche des äußeren Schaftes (10) montiert sind.

2. Beladevorrichtung nach Anspruch 1, dadurch gekennzeichnet, daß die Rollen von jedem Satz von Rollen (19) drehbeweglich an einer Halterung (29) montiert sind, die fest mit dem Träger (28) verbunden ist, sich in einer Richtung senkrecht zur axialen Richtung des Trägers (28) erstreckt und mit Spiel in das Innere einer Öffnung (27) des äußeren Schaftes (10) hindurchtreten kann.

3. Beladevorrichtung nach Anspruch 2, dadurch gekennzeichnet, daß sie zwei Führungselemente (18) aufweist, die im 180°-Winkel zueinander um die Achse (11) des äußeren Schaftes (10) herum angeordnet sind, so daß die Rollen von jedem der Sätze von Rollen (19) symmetrisch in Bezug auf eine axiale Fläche (30) des äußeren Schaftes (10) angeordnet sind.

4. Beladevorrichtung nach Anspruch 3, dadurch gekennzeichnet, daß der innere bewegliche Mast (13) Führungsschienen (31) aufweist, die geradlinige ebene Laufflächen (31a, 31b) aufweist, die dazu dienen, mit den Rollflächen der Rollen der Sätze von Rollen (19) zusammenzuwirken, um für die Führung des beweglichen Mastes (13) bei seiner Verschiebung in axialer Richtung zu sorgen.

5. Beladevorrichtung nach einem der Ansprüche 1 bis 4, dadurch gekennzeichnet, daß die abnehmbaren Einrichtungen zur Befestigung von jedem der Träger (28) an dem äußeren Schaft (10) wenigstens ein Positionierteil (36), das fest mit einem Abschnitt des axialen Endes des Trägers (28) verbunden ist und dazu dient, in eine Öffnung einer Haltelasche (32) eingesetzt zu werden, die fest mit dem äußeren Schaft (10) verbunden ist, und wenigstens ein mit einem Außengewinde versehenes Befestigungsteil (39) aufweist, das dazu dient, in eine außen am äußeren Schaft (10) befestigte, mit einem Innengewinde versehene Hülse (37) geschraubt zu werden, und das einen Abschnitt zum Einsetzen in eine Öffnung aufweist, die einen Endabschnitt des Trägers (28) durchbricht, der dem Positionierteil (36) gegenüberliegt.

6. Beladevorrichtung nach Anspruch 5, dadurch gekennzeichnet, daß die abnehmbaren Befestigungseinrichtungen von jedem der Träger (28) zwei Positionierteile (36) und zwei Befestigungsteile (39) aufweisen.

7. Beladevorrichtung nach einem der Ansprüche 1 bis 6, dadurch gekennzeichnet, daß von den geradlinigen Trägern (28) der Führungselemente (18) jeder einen Ring zur Handhabung (41) aufweist.

8. Beladevorrichtung nach Anspruch 6 oder 7, dadurch gekennzeichnet, daß der äußere Schaft (10) oberhalb von jeder unteren Haltelasche (32) eines Trägers (28) eines Führungselementes (18) eine Führungswand (40) aufweist, die nach oben hin in Form eines Trichters konisch erweitert ist, um für die Führung des Endabschnittes des Trägers (28), der das Positionierteil (36) aufweist, und das Einsetzen des Positionierteils (36) in die Öffnung der Haltelasche (32) beim Anordnen des Führungselements (18) am äußeren Schaft (10) zu sorgen.

## Claims

1. Machine for charging fuel assemblies (17) for the core of a nuclear reactor, inside a vessel of the reactor open at its top end in the reactor pool (2), comprising guidance means (6, 9) disposed above the vessel of the reactor, a carriage (12) mounted in a mobile manner on the guidance means (6, 9), an external tubular cylinder (10), attached to the carriage (12) with its axis (11) vertical, an internal cylindrical mast (13) mounted in a coaxial disposition and mobile in the axial direction (11) inside the external cylinder (10), by means of guidance elements (18) and means of displacement (14, 15) of the internal mast (13) in the axial direction (11) of the external cylinder (10) carried by the carriage (12), the guidance elements (18) of the internal mast (13) comprising at least two straight rails (31) attached to the internal mast (13) in an axial direction, each of the rails (31) being in contact with an assembly of at least two sets of rollers (19) mounted in a rotary manner about an axis perpendicular to the axial direction of the external cylinder (10) and of the internal mast (13) spaced from one another in the axial direction, the external cylinder (10) comprising a traversing opening (27) for the passage of each of the sets of rollers (19) associated with a rail (31) inside the external cylinder (13), characterized in that the sets of rollers (19) of each of the assemblies of at least two sets of rollers (19) in contact with a rail (31) attached to the internal mast (13) are mounted on a straight girder (98) of an assembly of at least two straight girders (28) provided with detachable fixing means (36, 39), in an axial direction over the external surface of the external cylinder (10).

2. Charging machine according to the Claim 1, characterized in that the rollers of each set of rollers (19) are mounted in a rotary manner on a support (29) integral with the girder (28) extending in a direction perpendicular to the axial direction of the girder (28), capable of passing with play inside an opening (27) of the external cylinder (10).

3. Charging machine according to Claim 2, characterized in that it comprises two guidance elements (18) disposed at 180° with respect to each other about the axis (11) of the external cylinder (10), in such a way that the rollers of each of the sets of rollers (19) are disposed symmetrically with respect to an axial plane (30) of the external cylinder (10).

4. Charging machine according to Claim 3, characterized in that the mobile internal mast (13) comprises guidance rails (31) comprising flat straight tracks (31a, 31b) intended to cooperate with the rolling surfaces of the rollers of the sets of rollers (19) to provide the guidance of the mobile mast (13) during its displacements in the axial direction.

5. Charging machine according to any one of Claims 1 to 4, characterized in that the detachable means of fixing of each of the girders (28) on the external cylinder (10) comprise at least one positioning stud (36) integral with an axial end part of the girder (28) intended to be engaged in an opening of a support lug (32) integral with the external cylinder (10) and at least one threaded attachment stud (39) intended to be screwed in an externally tapped sleeve (37) attached to the external cylinder (10) and comprising a part for engagement in an opening traversing an end part of the girder (28) opposite to the end with the positioning stud (36).

6. Charging machine according to Claim 5, characterized in that the detachable means of fixing of each of the girders (28) comprise two positioning studs (36) and two attachments studs (39).

7. Charging machine according to any one of Claims 1 to 6, characterized in that the straight girders (28) of the guidance elements (18) each comprise a handling ring (41).

8. Charging machine according to any one of Claims 6 and 7, characterized in that the external cylinder (10) comprises, above each of the lower support lugs (32) of a girder (28) of a guidance element (18), an upwardly splaying funnel-shaped guidance surface to ensure the guidance of the end part of the girder (28) comprising the positioning stud (36) and the engagement of the positioning stud (36) in the opening of the support lug (32), during the positioning of the guidance element (18) on the external cylinder (10).
